# EUROPEAN PATENT APPLICATION

(11) **EP 1 260 256 A1**
(43) Date of publication of application: **27.11.2002**
(21) Application number: 02425328.8
(22) Date of filing: 23.05.2002
(51) Int. Cl.: B01D 1/16, B01D 1/00, B01D 3/06, B01D 1/20

(54) **Apparatus for concentrating vegetables juices and fruit puree for alimentary use**

(30) Priority: 23.05.2001 IT MI20011091
(71) Applicant: FMC Technologies Italia S.p.A., I-43100 Parma PR (IT)
(72) Inventor: Guatelli, Giacomo, 43030 Basilicanova PR (IT)
(74) Representative: Adorno, Silvano

(57) **Abstract**

Apparatus for concentrating vegetables juices and fruit puree for alimentary use heated through rising current forced circulation in a heat exchanger (1) and fed from the top in an evaporation chamber (2), wherein between the exchanger (1) which heats the juices, and evaporation chamber (2) there is interposed a junction device (3) formed of a bell-like body (9) having a lateral opening (14) for vapor discharging, and containing a central pipe (17) coaxial thereto, having an upper end (16) connectable to piping (4) and a lower end projecting in chamber (2), connected to a shower head (13) with a perforated plate suitable for spreading finely the liquid-vapor mixture inside evaporation chamber (2).

## Description

The present invention relates to an apparatus for concentrating vegetables juices and fruit puree for alimentary use such as, for example, tomato juices and particularly an apparatus wherein said juices and puree are heated by means of a forced rising current circulation in an heat exchanger and fed from the top in an evaporation chamber.

Apparatuses are already known for concentrating juices and puree, especially tomato juices, which consist essentially in a varied viscosity mash obtained by chopping and heat-treating the fruit or fresh vegetable. Then these juices/purees are subjected to further processings to obtain concentrates characterized by different desired dried residues. These processings are made with concentrating apparatuses which have been subjected to continuous evolutions in the years to solve inconveniences intrinsically linked to the difficulty to circulating these products, whose viscosity increases fast with the increase of the concentration. The most used concentrating plants at present carry out the product heating during the concentration step through a shell-and-tube exchanger and the feeding thereof to a chamber in which the separation of vapor from product takes place during the concentration step. In some known plant the heat exchanger is arranged at a lower level with respect to the mouth of the evaporation chamber, therefore the product heated in the heater must pass through a rising segment before opening into said chamber. This arrangement implies different drawbacks, hence in Italian patent 1,231,497 it has been proposed to arrange the heat exchanger above the evaporation chamber so that heated product enters the latter by crossing the heat exchanger from top to bottom (descending current). But also this arrangement is not free from drawbacks. For example, in case of stopping of the circulation pump for the concentrated product or in case of low circulation of the same product, the evaporation occurs inside the heat exchanger tubes with consequent product burning.

Particularly, with circulation pump stopping, the exchanger empties by gravity leaving a thin film on the exchanger tubes, which burns instantly due to the vapor left in the shell side, even when immediate closure of the vapor feed to the exchanger is immediately provided, thus compromising the subsequent exchange capability. On the contrary, if circulation is insufficient (low speed) evaporation tends to take place in the final part of the tubes, that is nearby the vapor separation chamber, with consequent burnings.

Therefore, object of the present invention is to provide a concentrating apparatus free from the above mentioned drawbacks. This object is achieved through an apparatus in which product to be concentrated is fed in rising current towards the evaporation chamber into which it is introduced from the top by using a proper junction device. The features of this apparatus are specified in claim 1. The following claims specify other features of the apparatus according to the present invention.

With respect to apparatuses according to the prior art, the one according to the present invention is structured in such a way that the exchanger tubes are always full of product to be concentrated.

In this way it offers the advantage of avoiding, in case of a stopping of the circulation pump, the burning of the thin film which has remained adherent to the internal surface of exchanger tubes, after the emptying thereof by gravity, even if the vapor adduction valve is closed immediately when the circulation pump stops.

In the apparatus according to present invention the exchanger tubes remain always full of product and, in case of stopping of the circulation pump and contemporaneous closure of the vapor valve, the temperature of the product inside them rises not more than 2-3 °C without creating any problem of heat-damage of the product itself.

Another advantage of the apparatus according to the present invention is to avoid that, for low flow rate of the circulation pump, evaporation occurs in the final part of exchanger tubes with rapid dirtying thereof and compromising the exchange capability and the circulation of the product and it is due to a proper seal maintained below the heat exchanger, as it will be clearer further on.

Further advantages will become evident to the expert in the field from the following detailed description of one embodiment of the apparatus according to the present invention with reference to the enclosed drawings in which:
Fig. 1 shows a schematic view in lateral elevation of the apparatus; and
Fig. 2 shows a detailed view of the junction device between the feeding pipe and the evaporation chamber according to the present invention.

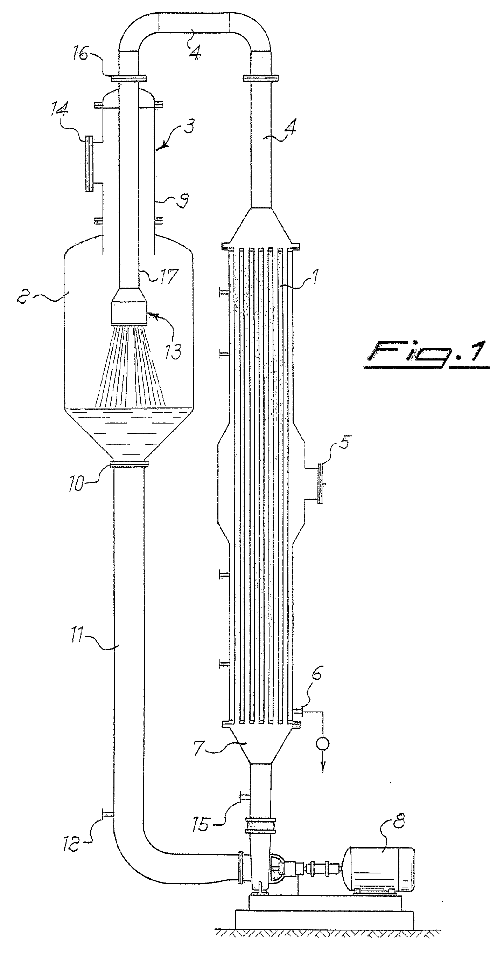

Referring to Fig.1, there is shown that heat exchanger 1, in which product to be concentrated is maintained in forced circulation from bottom to top by pump 8, is arranged at the side of evaporation chamber 2 in which the product to be concentrated is fed from the top through U-tube 4 and through the underlying junction device 3 containing coaxial tube 17 ending with a shower head 13, suitably invented for this invention. With this device it is avoided the drawback that during concentration step the product to be concentrated is subjected to risk of burnings in case of stopping or slowing of the circulation thereof inside the apparatus.

Shell-and-tube exchanger 1 is well-known and therefore does not require a specific description.

It has an opening 5 on the shell for heater vapor the entrance of the heating vapor and another opening 6 on the bottom for condense draining.

The product during the concentration thereof is circulated, pushed from pump 8, from bottom to top, that means in forced rising circulation, in exchanger 1 introducing it therein through entering hole 7.

The product, heated while crossing exchanger 1, comes out from top thereof, with rising circulation motion and, after having passed through pipe 4, comes to junction device 3, mounted above evaporation chamber 2. The heated product flows downwards passing through coaxial pipe 17 placed inside the junction device 3 and whose lower part projects into evaporation chamber 2. The free end of coaxial pipe 17 is provided with a shower head 13 whereto a perforated plate 20 is fixed.

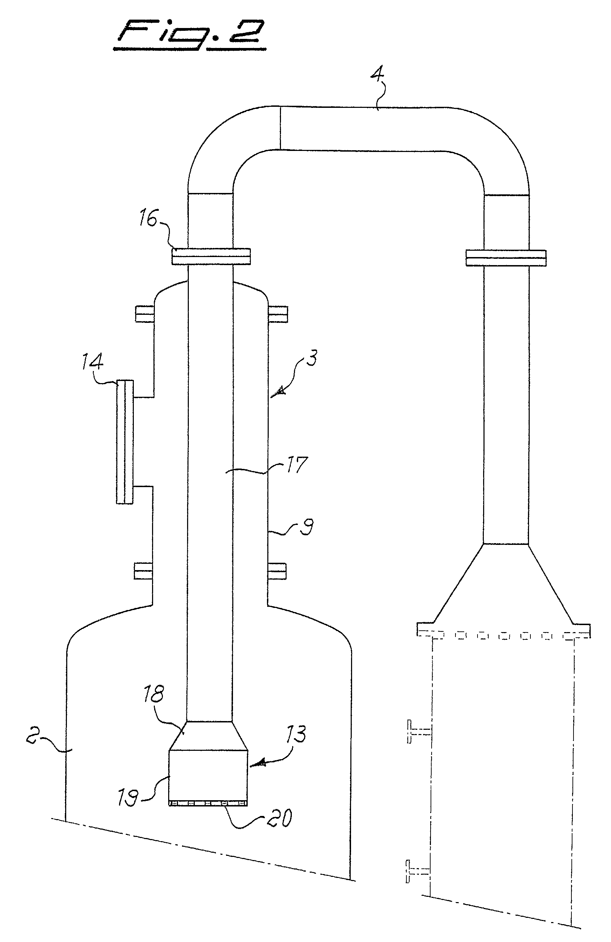

Junction device 3 constitutes an essential part of present invention and will be further described in a more detailed manner with reference to Fig. 2.

Evaporation chamber 2 is upperly provided with an entering opening through which the lower part of device 3 is inserted, and a lower hole 10 j oined to pipe 11, which connects it to pump 8, for product recycling.

The concentrated product is extracted from apparatus through opening 12. In order to keep the plant in stationary conditions during operation, extracted product and evaporated water are compensated with an equal quantity of juice to be concentrated which is introduced through entering hole 15.

Referring now to Fig. 2, there is shown that junction device 3 according to present invention is formed essentially of a bell-like body 9 centrally containing a coaxial pipe 17 having a diameter preferably equal to that of pipe 4. The upper end of pipe 17 is fixed to flange 16 to join it to pipe 4.

The lower portion of bell-like body 9 projects into evaporation chamber 2 to which it is fixed through a flange. On cylindrical wall of junction device 3 there is a lateral opening 14 to discharge the vapor separated in chamber 2 and collected inside bell-like body 9 whose lower part is obviously opened and, therefore, suitable to collect the vapors released from the underlying evaporation chamber 2.

The lower end of pipe 17 is connected to a frustoconical widening 18 and to an underlying cylindrical part 19 forming the head shower 13 to free end of which is fixed a perforated plate 20. The assembly of parts 18, 19, 20 projects inside underlying chamber 2 beyond the lower end of bell-like body 9 and its function is to spread out finely and shower-like the product to be concentrated into evaporation chamber 2 in the form of a plurality of fluid threads of heated product from which vapor separates much more easily. This vapor is collected inside bell-like body 9 and, as already described below, is discharged through the suitable lateral opening 14 of junction device 3.

The lower edge of cylindrical part 19 of the shower head 13, whose lower end is fixed to perforated plate 20, is arranged in such a way that heat exchanger 1, connected thereto through junction device 3 according to present invention, remains always, in any operative condition (not working pump or low recirculation of the product), full of product in concentration step. The above-mentioned problems of burning or dirtying of the tubes beam are thus avoided.

Evaporation chamber 2 is well-known and, therefore, does not require a particular specific description.

Also as long as the materials for carrying out the apparatus according to present invention are concerned, particular descriptions are not necessary, considering that the materials suitable for the specific features of the treated products must be used.

While apparatus is working, the juice or puree heated in exchanger 1 fall rain-like through shower head 13 into evaporation chamber 2 and, while descending, the vapor contained in liquid-vapor mixture is released.

The vapor released from the mixture rises promptly towards the upper part of chamber 2 (inverting its running) and is discharged through opening 14.

In order to invert and deviate suitably the course of the rising vapor current, so as to favour separation of the liquid droplets of different size which are remained in vapor current, pipe 17 (for the part projecting inside chamber 2) and shower head 13 can be preferably surrounded from a special deflector coaxial thereto, which are object of another co-pending patent application of the same applicant.
It is obvious that product to be concentrated can be introduced into the apparatus according to present invention in positions different from those indicated in the attached drawing. It is the same for the opening for extracting the concentrated product. Other additions and/or modifications can be obviously made by those skilled in the art to the embodiment here described and illustrated of the present invention.

## Claims

1. An apparatus for concentrating vegetable juices and fruit puree for alimentary use heated through forced rising current circulation in a heat exchanger (1) and fed from the top in an evaporation chamber (2), **characterized in that** between the exchanger (1) that heats the juices and the evaporation chamber (2) there is interposed a junction device (3) formed of a bell-like body (9) having a lateral opening (14), for vapor discharging, and containing a central pipe (17) coaxial thereto, having an upper end (16) connectable to piping (4) and a lower end projecting into chamber (2), connected to a shower head (13) with a perforated plate (20) suitable for spreading finely the liquid-vapor mixture inside evaporation chamber (2).

2. An apparatus according to claim 1, **characterized in that** the shower head (13) fixed to the lower end of coaxial pipe (17) projecting inside the chamber (2) is formed of a frustoconical body (18) connected to a cylindrical element (19) to the free end of which is fixed the perforated plate (20).

3. An apparatus according to one or more of the preceding claims **characterized in that** upper end (16) of the coaxial pipe (17), which comes out from the bell-like body (9), has a flange for joining the pipe (4).
